Europäisches Patentamt

European Patent Office

Office européen des brevets

(11) Veröffentlichungsnummer: **0 229 868**
**B1**

(12) **EUROPÄISCHE PATENTSCHRIFT**

(45) Veröffentlichungstag der Patentschrift:
**11.04.90**

(51) Int. Cl.⁴: **A01J 25/16**

(21) Anmeldenummer: **86107662.8**

(22) Anmeldetag: **05.06.86**

(54) **Vorrichtung für die Käseproduktion.**

(30) Priorität: **17.01.86 FR 8600622**

(43) Veröffentlichungstag der Anmeldung:
**29.07.87 Patentblatt 87/31**

(45) Bekanntmachung des Hinweises auf die Patenterteilung:
**11.04.90 Patentblatt 90/15**

(84) Benannte Vertragsstaaten:
**AT BE CH DE FR GB IT LI LU NL SE**

(56) Entgegenhaltungen:
**FR-A- 1 491 677**
**FR-A- 1 550 272**
**FR-A- 1 583 115**
**FR-A- 2 298 941**
**FR-A- 2 443 199**

(73) Patentinhaber: **Allner, Erich, Im Erzacker 2,
D-5307 Wachtberg 1 (DE)**

(72) Erfinder: **Allner, Erich, Im Erzacker 2,
D-5307 Wachtberg 1 (DE)**

(74) Vertreter: **Hübner, Hans-Jürgen, Dipl.-Ing.,
Mozartstrasse 31, D-8960 Kempten/Allgäu (DE)**

## Beschreibung

Die Erfindung betrifft eine Vorrichtung zur Weichkäseproduktion bestehend aus einem Stützrost, auf dem eine wasserdurchlässige Käsematte aufliegt, auf welcher eine Anzahl oben und unten offener Käseformen aufstellbar ist.

Bei der Weichkäse-Produktion laufen mehrere Prozesse nacheinander ab. Zuerst wird dick gestellte Milch in die Formen eingefüllt. Die Molke läuft ab. Dieser Pozeß dauert etwa 24 Stunden. Anschließend werden die Käsestücke aus den Formen herausgenommen und in der Regel einem Salzungsprozeß unterworfen. Dieser Vorgang nimmt ebenfalls etwa 24 Stunden in Anspruch. Schließlich werden diese Stücke getrocknet, und es beginnt der Reifungsprozeß, der etwa 10 Tage dauert, wobei ein häufiges Wenden der Käsestücke erforderlich ist.

Für alle drei Prozesse werden in der Regel dieselben Produktionsvorrichtungen verwendet, die als Käsehorden oder Wendebleche ausgebildet sind. Wegen des großen Platzbedarfes werden diese Wendebleche übereinander gestapelt, wobei sich die Bleche oder Horden während des Molkeablaufprozesses über die Formen abstützen, d.h., daß jede Horde von den Formen der darunter stehenden Horde getragen wird, während im weiteren Produktionsprozeß nach Wegnahme der Formen die Horden oder Wendebleche sich unmittelbar aneinander abstützen.

Eine Vorrichtung der eingangs genannten Art ist aus der FR-A 1 583 115 bekannt. Die Käsematte besteht aus einem Perforationsblech, das in den Stützrost eingelegt aber an diesem nicht befestigt ist. Bei den aufeinanderstehenden Stützrosten tropft die Molke aus den Käseformen der oberen Etage in die Formen der jeweils darunter stehenden Etagen, was einmal dazu führt, daß sich der Molkeablaufprozeß verzögert und zum anderen sich unterschiedliche Gewichte in den Formen nach Beendigung des Molkeablaufes ergeben. Außerdem sind die Füße der Horden gerade so lang, daß die Käsestücke zwischen den Käsematten Platz haben, wenn die Horden aufeinander gestapelt sind. Wegen der größeren Höhe der Formen während des Molkeablaufprozesses liegen somit die Stützroste auf den Oberrändern der Formen der darunter stehenden Horde auf, so daß die Formen von zwei benachbarten Etagen nur durch Stützrost und Käsematte voneinander getrennt sind. Die Deckfläche und die Bodenfläche des in den Formen befindlichen Käsebruches werden somit äußerst schlecht belüftet.

Eine ebenfalls gattungsgemäße Vorrichtung zeigt die FR-A 2 443 199. Bei ihr kann zwar wegen der undurchlässigen Bodenplatten dieser Horden die Molke nicht in die Formen der weiter unten stehenden gelangen und die beiden Randleisten verhindern auch ein seitliches überlaufen, jedoch hat dieser Vorschlag andere Nachteile. Die Böden dieser Horden weisen ein System von einander winklig kreuzenden Rillen auf, durch die Molke ablaufen soll. Tatsächlich setzen sich aber die Rillen mit Käsebruch zu und da mehrere Formen in Rillenlängsrichtung hintereinander stehen, ist der Molkeablauf von Form zu Form unterschiedlich. Außerdem kann die aus einer Horde seitlich austretende Molke durch Schrägkanäle in die nächst tiefere Horde wieder eintreten und füllt zusätzlich das Rillenablaufsystem dieser Horde. Je tiefer man kommt, um so größer wird die durch jede Horde abzuführende Molkemenge und je größer diese Molkemenge ist, um so mehr Käsebruch wird unter den Formen weggespült. Eine Gewichtskonstanz der Käsestücke nach Beendigung des Molkeablaufprozesses ist nicht gewährleistet. Bezüglich der mangelnden Belüftung des Käsebruches gilt im wesentlichen dasselbe wie beim vorherigen Stand der Technik. Hier sind die Formen durch oben und unten anliegende undurchlässige Platten geschlossen. Durch das Rillensystem der jeweils oberen Platte kann noch ein geringfügiger Luftaustausch stattfinden, während das bodenseitige Rillensystem durch Molke und Käsebruch gefüllt ist, so daß jeglicher Luftaustausch unterbunden ist.

Aus der FR-A 1 550 272 ist eine Vorrichtung bekannt, bei der an einem mit Füßen versehenen Rahmen ein Perforationsblech befestigt ist, auf dem die Käseformen aufgestellt werden. Alternativ kann das Perforationsblech durch einen am Rahmen befestigten Gitterrost ersetzt werden. Die Nachteile sind dieselben wie bei dem zuerst beschriebenen Stand der Technik.

Aufgabe der Erfindung ist es, die bekannten Vorrichtungen dahingehend zu verbessern, daß eine optimale Belüftung der Käseformen und des Käsebruches erreicht wird, ein Stau bei Molkeablauf verhindert und dieser selbst vergleichmäßigt wird.

Diese Aufgabe wird bei einer Vorrichtung der eingangs genannten Art dadurch gelöst, daß diese Vorrichtung eine undurchlässige, rechteckförmige Bodenplatte mit mindestens zwei einander gegenüberliegenden, von der Bodenplatte nach oben stehenden Randleisten aufweist, daß die Bodenplatte Befestigungsmittel aufweist, so daß der Stützrost im Abstand von der Bodenplatte und parallel zu dieser an ihr bzw. ihren Randleisten gehaltert ist, daß der Stützrost oder die Randleisten der Bodenplatte auch Befestigungsmittel aufweist, so daß die Käsematte am Stützrost oder den Randleisten befestigt ist und daß zwei Längsschienen an der Unterseite der Bodenplatte angeordnet sind.

Der Stützrost bildet eine Tragkonstruktion für die Käsematte, die absolut eben aufliegt, weil sie am Stützrost im gespannten Zustand gehaltert werden kann. Unter der Käsematte befindet sich eine durch keinerlei Einbauten unterteilte Belüftungskammer, in der die Luft zirkulieren kann, so daß auch stehende Gaspolster vermieden werden, die zur Belüftung nicht beitragen würden. Die Bodenplatte wirkt selbst als Ablaufblech für die Molke, so daß ein separates Molkeablaufblech entfällt. Dank der optimalen Belüftung der Formen und des Käsebruches wird ein thermischer Ausgleich an allen Oberflächen geschaffen, wodurch ein gleichmäßiger Molkeablauf gewährleistet wird. Irregularitäten im Käsebruch werden vermieden, so daß Gewichtsabweichungen im Rahmen einer gewissen Toleranzgrenze ausgeschaltet sind.

Die erfindungsgemäßen Vorrichtungen werden nicht mehr aufeinander gestapelt, sondern werden dank ihrer Bodenschienen in Gestellen im Höhenabstand voneinander gehalten. Somit liegen auch die deckseitigen Oberflächen der Käsemassen in den Formen frei, so daß auch hier eine gute Belüftung mit optimalem thermischem Ausgleich geschaffen ist. Die Luft kann auch von allen Seiten an die Formen heran, was z.B. wegen der Umfangsränder beim Gegenstand der FR-A 2 442 199 nicht der Fall ist.

Durch das Merkmal von Anspruch 2 wird ein Herausrutschen der Formen vermieden. Die Merkmale von Anspruch 3 führen dazu, daß die Längsschlitze in jeder Randleiste angenähert von deren einem Ende zu deren anderem Ende reichen und eine lediglich durch schmale Vertikalstege unterbrochene Auslauföffnung gebildet wird. Dank dieser Ausgestaltung hat die Vorrichtung eine ringsumlaufende Reling, die die Käseformen beim Wendevorgang festhält. Gleichwohl ist für einen praktisch ungehinderten Molkeablauf aus der Vorrichtung gesorgt und eine optimale Luftzirkulation sichergestellt.

Die Merkmale der Ansprüche 4 und 5 führen zu dem Vorteil, daß die Molke nicht unkontrolliert auslaufen kann und daß die Vorrichtung an allen vier Seiten belüftet wird, so daß ein vollkommener thermischer Ausgleich an allen Oberflächen der Formen vorhanden ist. Mit den Merkmalen der Ansprüche 6 und 7 werden eine einfache Halterung und Ausbildung des Stützrostes erzielt.

Anhand der Zeichnung, die ein Ausführungsbeispiel darstellt, sei die Erfindung näher beschrieben.

Es zeigt

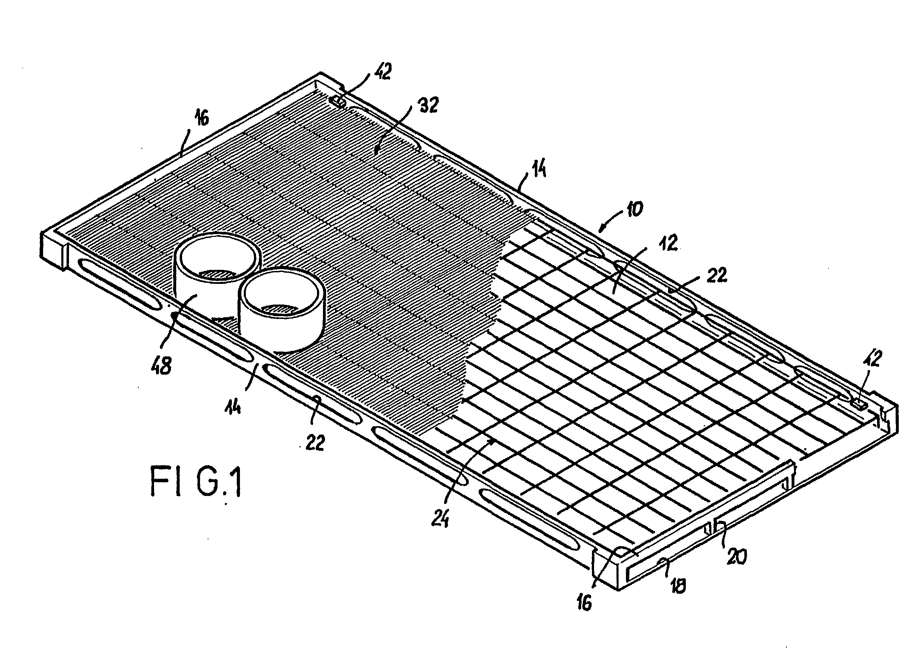

Fig. 1 eine perspektivische Ansicht der neuen Vorrichtung,

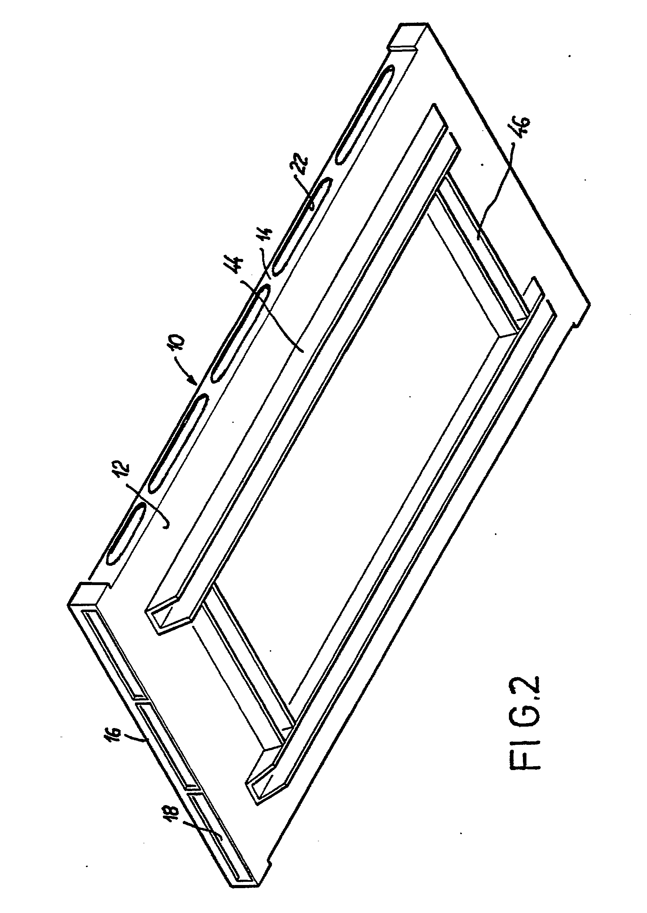

Fig. 2 eine perspektivische Bodenansicht der Vorrichtung nach Fig. 1, und
Fig. 3 eine Längsschnittansicht durch einen Teil der Vorrichtung.

Eine Vorrichtung 10 besteht aus einer Bodenplatte 12 mit Rechteckformat, an deren Längsrändern nach oben stehende Randleisten 14 und an deren Querrändern ebenso hohe Randleisten 16 vorgesehen sind, die einen ringsumlaufenden Rahmen oder Einfassung bilden. In den Quer-Randleisten 16 sind Längsschlitze 18 angeordnet, die über die ganze Breite der Vorrichtung 10 reichen und lediglich durch schmale Vertikalstege unterbrochen sind. Diese Längsschlitze 18 beginnen unmittelbar an der Bodenplatte und erstrecken sich mindestens über die halbe Höhe der Randleisten 16. In den Längs-Randleisten 14 sind Belüftungsöffnungen 22 vorgesehen, die ebenfalls in Form von Längsschlitzen ausgebildet sind, jedoch im Abstand von der Bodenplatte 12 enden.

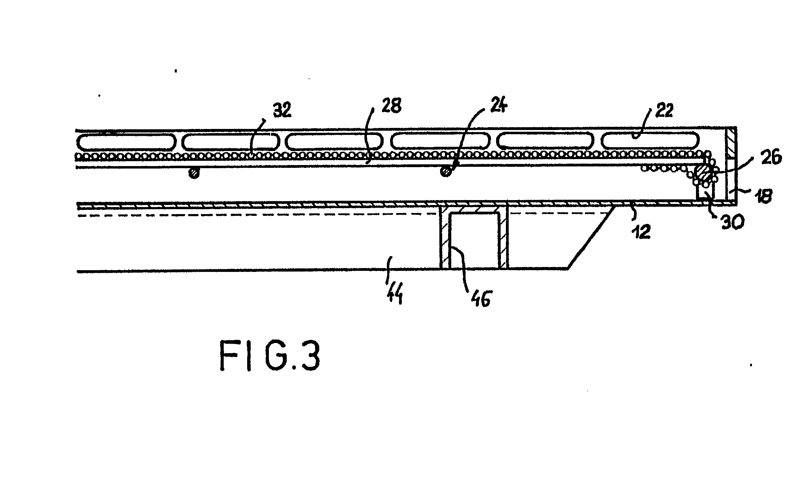

In der Vorrichtung 14 befindet sich ein Stützrost 24, der aus Längs- und Querstäben besteht. Mindestens die beiden Querstäbe 26 an den Enden des Stützrostes 24 sind im Durchmesser größer als die Längsstäbe 28 (Fig. 3) und die Enden der End-Querstäbe 26 sind nach unten umgebogen, so daß vier Füße 30 gebildet sind, mit denen sich der Stützrost 24 auf der Bodenplatte 12 abstützt.

Auf dem Stützrost 24 ist eine durchlässige Käsematte 32 befestigt, die aus einer Vielzahl in geringem Abstand dicht-benachbarter paralleler Kunststoffstäbe besteht, welche mittels rechtwinklig dazu verlaufenden Kettdrahtbändern verankert sind.

Die Käsematte 32 liegt auf den Längsstäben 28 des Stützrostes 24 auf. Die Kunststoffstäbe erstrecken sich rechtwinklig zu den Längsstäben 28 und ihre Länge ist etwa gleich der lichten Weite der Vorrichtung 10. Die Käsematte 32 ist um die beiden End-Querstäbe 26 herum gelegt. Die Käsematte 32 wird dann in Längsrichtung gespannt und ihre, die Längsstäbe 28 des Stützrostes 24 untergreifenden Enden werden dann mit den darüberliegenden Teilen der Käsematte 32 z.B. mittels Druckknopfverschlüssen verbunden. An beiden Längsrandleisten 14 sind innenseitig je zwei Vorsprünge 42 vorgesehen, die den Stützrost 24 und die Käsematte 32 übergreifen, so daß diese beim Wenden der Vorrichtung 10 nicht herausfallen kann. Die Vorsprünge 42 ragen soweit nach innen, daß der auf der gegenüberliegenden Seite anliegende Stützrost 24 gerade noch überlappt wird. Das Einsetzen des Stützrostes 24 ist durch lokales elastisches Einbauchen des äußersten Längsstabes 28 im Bereich der Vorsprünge 42 leicht möglich, wobei der äußere Längsstab 28 dann unter den Vorsprüngen 42 in seine ursprüngliche Form zurückspringt.

An der Unterseite der Bodenplatte 12 sind zwei Längsschienen 44 mit unten offenem U-Querschnitt angeordnet, die zum Einklemmen einer Wendevorrichtung dienen und gleichzeitig Führungsmittel für einen automatischen Transport darstellen. Nahe der beiden Enden der Längsschienen 44 sind zwischen diesen Querschienen 46 angeschweißt, die der Versteifung dienen.

In der Praxis werden auf die Käsematte 32 der Vorrichtung 10 Käseformen 48 aufgestellt, in die die Käserohmasse eingefüllt wird. Die Molke läuft sofort gleichmäßig durch die Käsematte 32 nach unten ab und fließt dann über die leicht schräg gestellte Bodenplatte 12 der Vorrichtung 10 durch die Längsschlitze 18 stirnseitig heraus. Dank der allseitigen hochwirksamen Belüftung von unten, von der Seite und von oben wird ein gleichmäßiger Molkeablauf sicher gestellt. Insbesondere die unterhalb der Käsematte 32 befindliche, nirgendwo verbaute oder unterteilte Belüftungskammer ist für den optimalen thermischen Austausch maßgeblich, da in dieser Kammer Luft durch die Längsschlitze 18 an beiden Stirnseiten und die beidseitigen Belüftungsöffnungen 22 frei zirkulieren kann. In der Praxis werden im späteren Produktionsgang mehrere Vorrichtungen 10 übereinander angeordnet, wobei jede zweite Vorrichtung mit der Bodenseite nach oben zeigt. Die Längsschlitze 18 und die Belüftungsöffnungen 22 gewährleisten dann eine allseitige gleichmäßige Belüftung der Käseformen 48.

**Patentansprüche**

1. Vorrichtung zur Weichkäse-Produktion bestehend aus einem Stützrost (24), auf dem eine wasserdurchlässige Käsematte (32) aufliegt, auf welcher eine Anzahl oben und unten offener Käseformen aufstellbar ist, dadurch gekennzeichnet, daß diese Vorrichtung eine undurchlässige, rechteckförmige Bodenplatte (12) mit mindestens zwei einander gegenüberliegenden, von der Bodenplatte (12) nach oben stehenden Randleisten (14, 16) aufweist, daß die Bodenplatte (12) Befestigungsmittel aufweist, so daß der Stützrost (24) im Abstand von der Bodenplatte (12) und parallel zu dieser an ihr bzw. ihren Randleisten (14, 16) gehaltert ist, daß der Stützrost (24) oder die Randleisten (14, 16) der Bodenplatte auch Befestigungsmittel aufweist, so daß die Käsematte (32) am Stützrost (24) oder den Randleisten (14, 16) befestigt ist, und daß zwei Längsschienen (44) an der Unterseite der Bodenplatte (12) angeordnet sind.

2. Vorrichtung nach Anspruch 1, dadurch gekennzeichnet, daß sich die Randleisten (14,16) über den Stützrost (24) hinaus nach oben erstrecken.

3. Vorrichtung nach Anspruch 1 oder 2, dadurch gekennzeichnet, daß die Enden der beiden Randleisten (14) durch zwei querverlaufende Randleisten (16) zu einem ringsumlaufenden Rahmen verbunden sind und daß zwei einander gegenüberliegende Randleisten (16) Längsschlitze (18) aufweisen, die absatzlos an die Bodenplatte (12) anschließen und nach oben mindestens bis etwa zum Niveau des Stützrostes (24) reichen.

4. Vorrichtung nach Anspruch 3, dadurch gekennzeichnet, daß die beiden, keine Längsschlitze (18) aufweisenden Randleisten (14) über ihre ganze Länge im wesentlichen gleichmäßig mit Belüftungsöffnungen (22) versehen sind, die im Abstand von der Bodenplatte (12) angeordnet sind.

5. Vorrichtung nach Anspruch 3, dadurch gekennzeichnet, daß die Längsschlitze (18) in jeder Randleiste (16) angenähert von deren einem Ende bis zu deren anderem Ende reichen und eine lediglich durch schmale Vertikalstege (20) unterbrochene Auslauföffnung bilden.

6. Vorrichtung nach einem der Ansprüche 1 bis 5, dadurch gekennzeichnet, daß an den Innenseiten von zwei einander gegenüberliegenden Randleisten (14) im Abstand von der Bodenplatte (12) angeordnete Vorsprünge (42) vorgesehen sind, die den Stützrost (24) übergreifen oder über- und untergreifen.

7. Vorrichtung nach einem der Ansprüche 1 bis 6, dadurch gekennzeichnet, daß der Stützrost (24) aus wenigen Querstegen (26) und einer Mehrzahl darüberliegender Längsstäbe (28) besteht und daß zwei Querstäbe (26) an den Enden der Längsstäbe (28) befestigt sind, einen größeren Querschnitt als diese aufweisen und nach unten abgebogene Füße (30) tragen.

## Claims

1. Apparatus for soft cheese production, comprising a support grid (24) on which there lies a water-permeable cheese mat (32) on which a number of cheese moulds open to top and bottom can be placed, characterized in that this apparatus has an impermeable rectangular base plate (12) having at least two mutually opposing edge strips (14, 16) protruding upwards from the base plate (12), in that the base plate (12) has securing means so that the support grid (24) is mounted on the base plate or its edge strips (14, 16), spaced from the base plate (12) and parallel thereto, in that the support grid (24) or the edge strips (14, 16) of the base plate also have securing means so that the cheese mat (32) is secured to the support grid (24) or the edge strips (14, 16), and in that two longitudinal rails (44) are arranged on the underside of the base plate (12).

2. Apparatus according to claim 1, characterized in that the edge strips (14, 16) extend upwards beyond the support grid (24).

3. Apparatus according to claim 1 or 2, characterized in that the ends of the two edge strips (14) are connected by two transverse edge strips (16) to form a surrounding frame, and in that two mutually opposing edge strips (16) have longitudinal slits (18) which are connected without a break to the base plate (12) and reach upwards approximately at least as far as the level of the support grid (24).

4. Apparatus according to claim 3, characterized in that the two edge strips (14) having no longitudinal slits (18) are provided over their entire length substantially uniformly with venting openings (22) which are arranged spaced from the base plate (12).

5. Apparatus according to claim 3, characterized in that the longitudinal slits (18) in each edge strip (16) reach approximately from one end thereof to the other end thereof and form an outlet opening interrupted only by narrow vertical webs (20).

6. Apparatus according to one of claims 1 to 5, characterized in that projections (42) arranged on the insides of two mutually opposing edge strips (14) and spaced from the base plate (12) are provided which lap over or lap over and under the support grid (24).

7. Apparatus according to one of claims 1 to 6, characterized in that the support grid (24) comprises a few transverse webs (26) and a plurality of longitudinal rods (28) lying thereover, and in that two transverse rods (26) are secured to the ends of the longitudinal rods (28), have a larger cross-section than the latter and carry feet (30) which are bent downwards.

## Revendications

1. Dispositif pour la production de fromage à pâte molle, consistant en une grille-support (24) sur laquelle est placée une natte à fromage perméable à l'eau (32) sur laquelle peuvent être placées un nombre de formes à fromage ouvertes à la partie supérieure et à la partie inférieure, caractérisé en ce que ce dispositif présente une plaque de fond (12) rectangulaire imperméable avec au moins deux rebords (14, 16) opposés s'étendant de la plaque de base (12) vers le haut, que la plaque de fond (12) présente des moyens de fixation, de sorte que la grille-support (24) est supportée à une distance de la plaque de fond (12) et parallèlement à celle-ci ou à ses rebords (14, 16), que la grille-support (24) ou les rebords (14, 16) de la plaque de fond présentent également des moyens de fixation, de sorte que la natte à fromage (32) est fixée à la grille-support (24) ou aux rebords (14, 16) et que deux rails longitudinaux (44) sont disposés à la partie inférieure de la plaque de fond (12).

2. Dispositif suivant la revendication 1, caractérisé en ce que les rebords (14, 16) s'étendent vers le haut, au-delà de la grille-support (24).

3. Dispositif suivant la revendication 1 ou 2, caractérisé en ce que les extrémités des deux rebords (14) sont reliées par deux rebords (16) disposés transversalement, pour former un cadre en pourtour, et que deux rebords (16) opposés présentent des fentes longitudinales (18) qui rejoignent sans rehaussement la plaque de fond (12) et s'étendent vers le haut au moins jusqu'à environ la hauteur de la grille-support (24).

4. Dispositif suivant la revendication 3, caractérisé en ce que les deux rebords (14) ne présentant pas de fentes longitudinales (18) sont pourvus, de manière sensiblement uniforme, sur toute leur longueur, d'orifices de ventilation (22) disposés à une distance de la plaque de fond (12).

5. Dispositif suivant la revendication 3, caractérisé en ce que les fentes longitudinales (18) dans chaque rebord (16) s'étendent d'environ l'une de leurs extrémités à l'autre et forment un orifice d'écoulement interrompu uniquement par d'étroites traverses verticales (20).

6. Dispositif suivant l'une des revendications 1 à 5, caractérisé en ce qu'il est prévu des saillies (42), disposées des côtés intérieurs de deux rebords opposés (14), à une distance de la plaque de fond (12), qui s'engagent au-dessus ou au-dessus et au-dessous de la grille-support (24).

7. Dispositif suivant l'une des revendications 1 à 6, caractérisé en ce que la grille-support (24) se compose de quelques traverses transversales (26) et d'une pluralité de barres longitudinales (28) disposées au-dessus de ces dernières et que deux barres transversales (26) sont fixées aux extrémités des barres longitudinales (28), présentent une section supérieure à celle de ces dernières et portent des pieds-supports (30) recourbés vers le bas.

FIG.1

FIG.2

EP 0 229 868 B1

FIG.3

EP 0 229 868 B1